# EUROPEAN PATENT SPECIFICATION

(11) **EP 3 588 862 B1**
(45) Date of publication and mention of the grant of the patent: **06.01.2021**
(21) Application number: 18180089.7
(22) Date of filing: 27.06.2018
(51) Int. Cl.: H04L 12/26

(54) **COMMUNICATION SYSTEM CORE NETWORK AND METHOD FOR PROVIDING HEART-BEAT MESSAGES**
KOMMUNIKATIONSSYSTEM-KERN-NETZWERK UND VERFAHREN ZUR BEREITSTELLUNG VON HERZSCHLAG-NACHRICHTEN
RÉSEAU CENTRAL DE SYSTÈME DE COMMUNICATION ET PROCÉDÉ DE FOURNITURE DE MESSAGES DE BATTEMENT CARDIAQUE

(43) Date of publication of application: 01.01.2020
(73) Proprietor: NTT DOCOMO, INC., Chiyoda-ku, Tokyo 100-6150 (JP)
(72) Inventor: GUERZONI, Riccardo, 80687 Munich (DE); ISHIKAWA, Hiroshi, Tokyo, 100-6150 (JP); SAMA, Malla Reddy, 80687 Munich (DE); THAKOLSRI, Srisakul, 80687 Munich (DE)
(74) Representative: Viering, Jentschura & Partner mbB Patent- und Rechtsanwälte

(56) References cited:
- US-A1- 2012 167 118
- "3rd Generation Partnership Project; Technical Specification Group Core Network and Terminals; 5G System - Phase 1; CT WG4 Aspects (Release 15)", 3GPP DRAFT; 29891-F00, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 29 January 2018 (2018-01-29), XP051384057, Retrieved from the Internet: URL:http://www.3gpp.org/ftp/tsg%5Fct/WG4%5 Fprotocollars%5Fex%2DCN4/TSGCT4%5F82%5FGot henburg/Docs/ [retrieved on 2018-01-29]
- HUAWEI ET AL: "SMF selection in roaming case", 3GPP DRAFT; S2-174542 TS 23.502 SMF SELECTION IN ROAMING CASE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. San Jose Del Cabo, Mexico; 20170626 - 20170630 25 June 2017 (2017-06-25), XP051303387, Retrieved from the Internet: URL:http://www.3gpp.org/ftp/Meetings_3GPP_ SYNC/SA2/Docs/ [retrieved on 2017-06-25]
- "3rd Generation Partnership Project; Technical Specification Group Services and System Aspects; Study on Enhancements to the Service-Based Architecture (Release 16)", 3GPP STANDARD; TECHNICAL REPORT; 3GPP TR 23.742, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.2.0, 10 June 2018 (2018-06-10), pages 1-39, XP051451682, [retrieved on 2018-06-10]

## Description

The present disclosure relates to communication system core networks and methods for providing heart-beat messages. 3GPP DRAFT Technical Report TR 29.891 "3rd Generation Partnership Project; Technical Specification Group Core Network and Terminals; 5G System - Phase 1; CT WG4 Aspects (Release 15)" published on 2018-01-29, indicates three different ways to set up hear-beat messages by leveraging the http protocol exclusively under the assumption of fixed end points, i.e. under the assumption of sticky connections. Additionally 3GPP Draft S2-174542 "SMF selection in roaming case" published on 2017-06-25 discloses SMF selection policies in roaming cases and specifically indicates how a new sticky binding may be established between requesting network functions and providing network functions.

In the 5GC SBIs (Service Based Interfaces) the bindings between 5GC entities (service consumers or service producers) are established dynamically. This can be seen as a key feature to implement a cloud-native 5GC. In this context, checking if the communication between two 5GC entities is still active is a key issue to implement a highly reliable 5GC. Accordingly, approaches to handle heart-beat messages in a scenario where service consumer and service producer can be temporarily bound or unbound are desirable.

This objective is solved by the invention as claimed by the independent claims 1 and 11. Preferred embodiments of the invention are defined by the dependent claims.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system.
- Figure 2: illustrates that a first core network entity sends a service request to a second core network entity which requests the second core network entity to send of heart-beat messages.
- Figure 3: illustrates an exchange of heart-beat messages depending on the binding between 5GC entities.
- Figure 4: illustrates an example in which a 5GC network entity performs discovery of a 5GC entity to which a heart-beat message is to be sent.
- Figure 5: illustrates a first 5GC entity of a group of 5GC entities sending a service request to a 5GC entity.
- Figure 6: shows an option where a service consumer sends a service request to a service producer and the service producer responds with a service response and sends heart-beat messages to the service consumer.
- Figure 7: shows an option where a service consumer sends a service request to a service producer and the service producer responds with a service response and the service consumer sends heart-beat messages to the service producer.
- Figure 8: shows an option where a service consumer sends heart-beat messages to a service producer and sends a service request to which the service producer responds with a service response which indicates that the service consumer should stop sending heart-beat messages.
- Figure 9: shows an option where a service consumer sends heart-beat messages to a service producer and the service producer sends a Service Binding Release message which indicates that the service consumer should stop sending heart-beat messages.
- Figure 10: shows a message flow diagram illustrating a use case for heart-beat transmissions.
- Figure 11: shows a message flow diagram illustrating another use case for heart-beat transmissions.
- Figure 12: illustrates a method according to various embodiments to handle heart-beat messages between service entities in a communication network in which control plane and user plane are implemented by a multiplicity of service entities.
- Figure 13: illustrates the case that a first group of service entities includes only one service entity and that one or more of the service entities of a second group of service entities send heart-beat messages to that service entity.
- Figure 14: shows a communication system core network according to an embodiment.
- Figure 15: shows a flow diagram illustrating a method for providing heart-beat messages.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

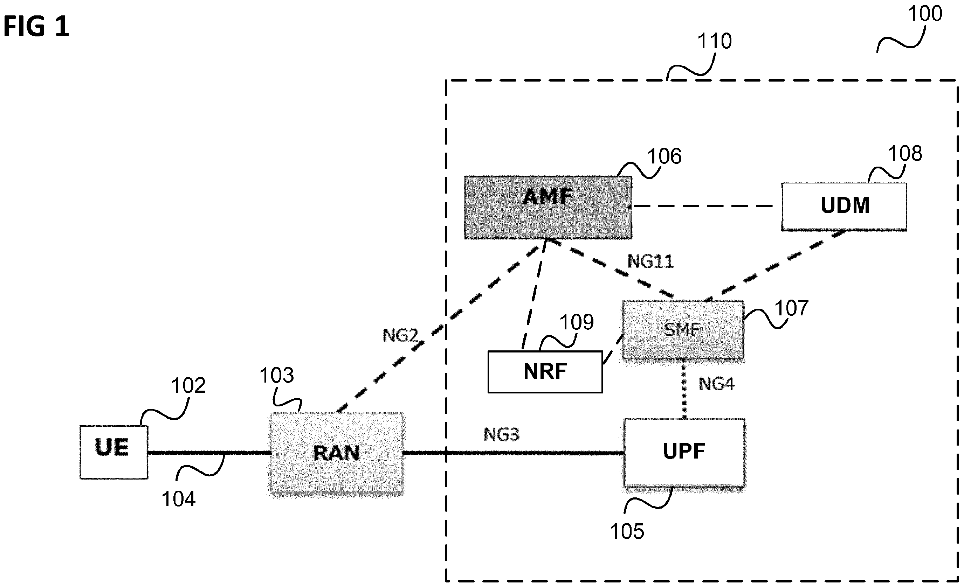

Figure 1 shows a radio communication system 100.

The radio communication system 100 includes a radio communication terminal device 102 such as a UE (user equipment), a nano equipment (NE), and the like.

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another mobile radio communication standard but 5G is herein used as an example. Each radio access network node may provide a radio communication with the radio communication terminal device 102 over an air interface 104. It should be noted that the radio access network 103 may include any number of radio access network nodes.

The radio communication system 100 may further include a core network 110 including a UPF (user plane function) 105, connected to the RAN 103, an Access and Mobility Management Function (AMF) 106 connected to the RAN 103, a Session Management Function (SMF) 107, a Unified Data Management (UDM) 108 and a Network Repository Function (NRF) 109.

It should be noted that for the various network functions (NFs) like the AMF 106 and the SMF 107, multiple instances may exist in the core network 110.

In the setup procedure for a Packet Data Unit (PDU) session, the AMF 106 requests the SMF 107 to create a Session Management (SM) Context. The Create SM Context is a service exposed by the SMF 107 and is invoked by the AMF 106.

It is typically desirable that a network function which operates together with another component of the core network 110 (which may for example be another network function) indicates, during an idle phase, to the other component that it is still operative (e.g. active and running). Such an indication may be performed by means of a heart-beat message.

For example, according to 3GPP, each network function (NF) that has previously registered in the NRF 109 shall contact the NRF 109 periodically (heart-beat), by invoking the NFUpdate service operation, in order to show that the NF is still operative. The time interval at which the NRF 109 (acting as Service producer for the registration service) shall be contacted is deployment-specific, and it is returned by the NRF 109 to the NF (acting as Service Consumer) as a result of a successful registration. The NF heart-beat to the NRF 109 is started after the successful registration to the NRF 109.

An HTTP heart-beat mechanism between 5GC NFs is foreseen according to 3GPP to allow a NF Service Consumer (i.e. an NF requesting a service) or NF Service Producer (i.e. an NF providing the service) to check the aliveness of a service on a peer NF in absence of regular traffic.

Thus, 3GPP identifies the need for direct heart-beat procedures between a NF Service Consumer and NF Service Producer for certain APIs. According to this mechanism, an NF Service Consumer provides a heart-beat URI to an NF Service Producer which provides PUT messages to the heart-beat URI.

According to this mechanism, the heart-beat is directly sent to the heart-beat URI. This means that there is an assumption that the two NF instances are sticky (i.e. that there is a permanent binding between the two NF instances).

However, it is possible that stickiness between 5GC entities is dynamically started/stopped (i.e. that there is a temporary binding) or that there no binding between service consumer instance and service producer instance (i.e. they are unbound or non-sticky).

In particular, the concept of a temporary binding has been introduced in 3GPP which allows creating and releasing a binding between a service consumer and a service producer. An entity creating a sticky binding (a service consumer in the service request or the service producer in a service response) indicates that it wishes to handle future transactions originated by the other entity. In case of a long living binding, it should be ensured that the bound endpoint (either the service consumer or the service producer) is still operative and the communication with it is still active.

According to various embodiments, the scenario is therefore addressed that the association between 5GC entities is possibly non-sticky, i.e. that the 5GC entity that will serve a transaction (including an heart-beat) can be discovered and selected dynamically, and that a binding between 5GC entities can be started and released dynamically. Various embodiments as described in the following allow implementing heart-beat messages between unbound 5GC entities and temporarily bound 5GC entities in that scenario.

In particular, it can be avoided that in case a binding is released (i.e. an association of a service consumer and a service producer changes from sticky to non-sticky) heart-beat messages stop. An association between a service consumer and a service producer can for example be at first be made sticky (with a corresponding indication in a service request or service response) and may later be released with a non-sticky indication (in another message exchange, e.g. again with a service request or service response).

It should be noted that while some embodiments are described herein for network functions having network function instances, they may more generally apply to groups of network (e.g. 5GC) components. Each group may correspond to a service which may be provided by various instances.

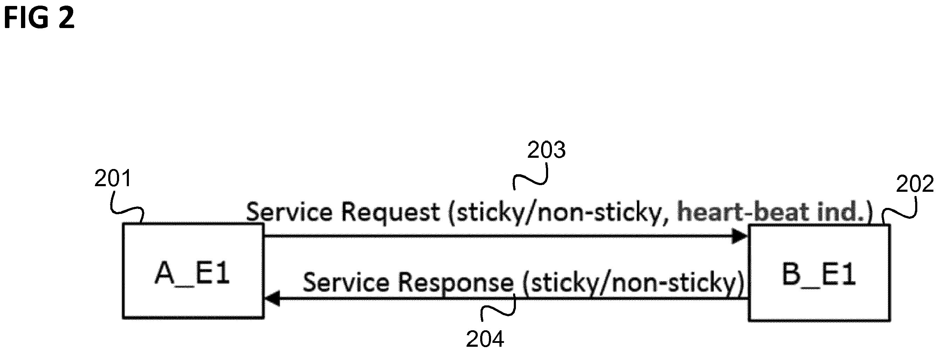

Figure 2 illustrates that a first core network entity sends a service request 203 to a second core network entity which requests the second core network entity 202 to send of heart-beat messages.

The second core network entity 202 responds with a service response 204. Either one or both of the service request 203 and the service response 204 may indicate that the association between the instance of the first core network entity 203 and the instance of the second core network entity 204 should be sticky.

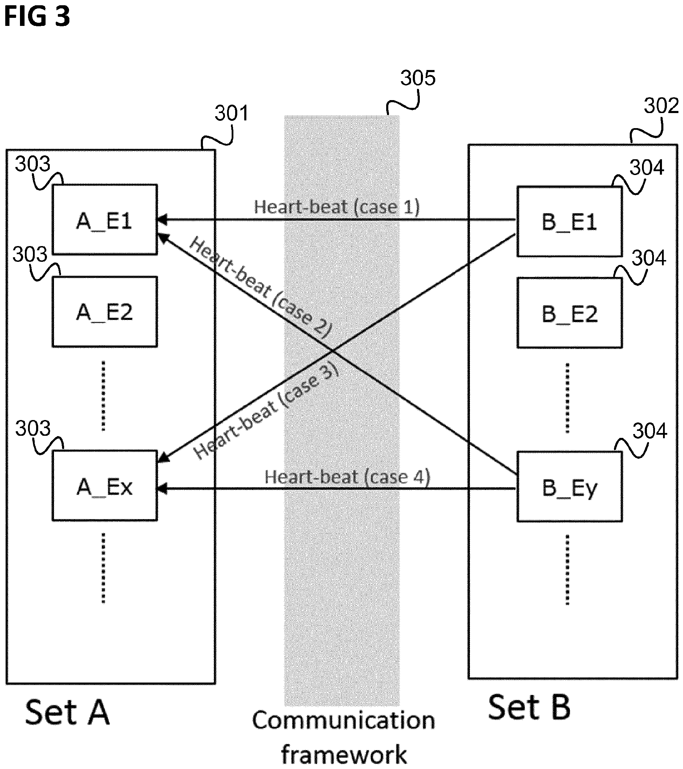

Figure 3 illustrates an exchange of heart-beat messages depending on the binding between 5GC entities.

A first group of 5GC network entities 301 has a plurality of 5GC network entities 303 (denoted as A_E1 to A_Ex) and a second group of 5GC network entities 302 has a plurality of second 5GC network entities 304 (denoted as B_E1 to B_Ey). It is assumed that the first 5GC network entity A_E1 of the first group of 5GC network entities 301 has requested the first 5GC network entity B_E1 of the second group of 5GC network entities 302 to send heart-beat messages.

The group of 5GC network entities 301, 302 exchange heart-beat messages via a communication framework 305 depending on the binding between the 5GC network entities as follows:
- Case 1: the first 5GC network entity A_E1 of the first group and the second 5GC network entity B_E1 of the second group are requested to stay sticky (e.g. both requested to stay sticky with each other). The first 5GC network entity B_E1 sends heart-beat messages to the first 5GC network entity A_E1.
- Case 2: it was requested to stay sticky with the first 5GC network entity A_E1. One 5GC entity in the second group 302 (B_Ey in figure 2) sends heart-beat messages to the first 5GC network entity A_E1 of the first group.
- Case 3: it was requested to stay sticky with the first 5GC network entity of the second group B_E1. The first 5GC network entity B_E1 sends heart-beat messages to any (but only one) of the 5GC entities in the first group (A_Ex in the figure)
- Case 4: it was not requested to stay sticky with A_E1 and B_E1. One 5GC entity in the second group (B_Ey in the figure) sends heart-beat messages to any (but only one) of the 5GC entities in the first group (A_Ex in the figure)

In cases 3 and 4 the discovery and selection of the 5GC entity to which a heart-beat message is sent is handled by the communication framework 305.

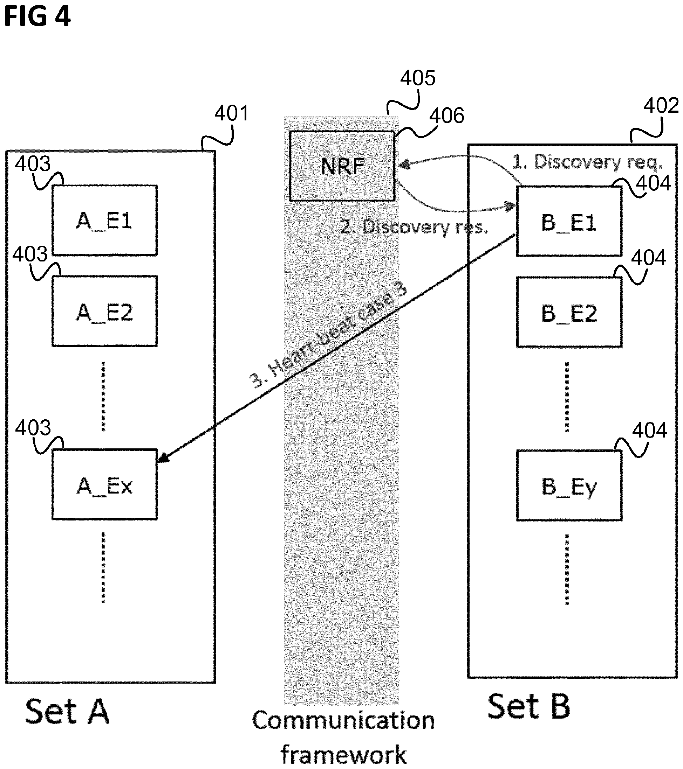

Figure 4 illustrates an example in which the first 5GC network entity B_E1 of the second group of 5GC entities 402 performs discovery with an NRF 406 and selects the 5GC entity A_Ex of the first group of 5GC entities 401 to which the heart-beat message is to be sent as target for the heart-beat message.

Alternatively, the first 5GC network entity B_E1 just sends the heart-beat message to a service mesh (without consulting an NRF) which takes care of delivering it to the appropriate destination.

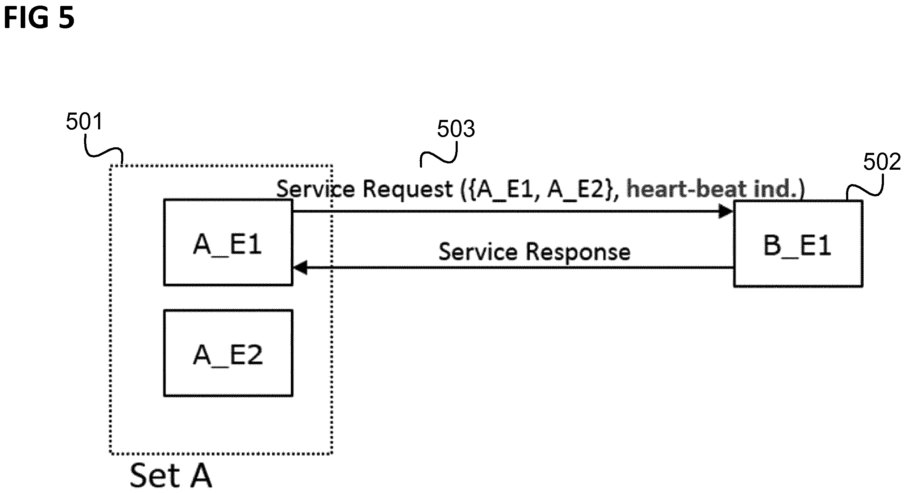

The set of 5GC entities to which a 5GC entity belongs can be determined by the communication network 405. Alternatively, a 5GC entity may indicate in a service request message or a service response message a list of 5GC entities that can handle future transactions related to a specific service. A corresponding example is illustrated in figure 5.

Figure 5 illustrates a first 5GC entity A_E1 of a group of 5GC entities 501 sending a service request 503 to a 5GC entity 502.

The service request 503 includes a list of the 5GC entities of the group of 5GC entities 501 as well as an indication that the 5GC entity 502 is to send heard-beat messages to the group of 5GC entities 501.

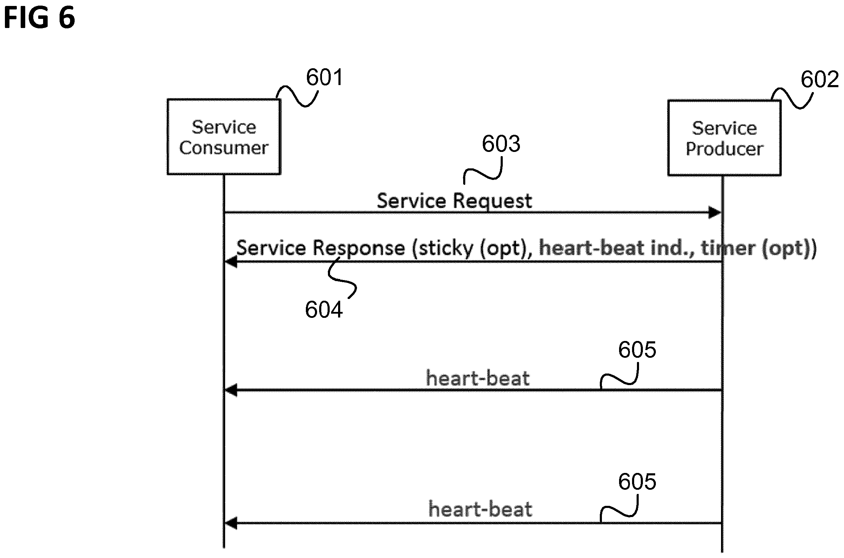

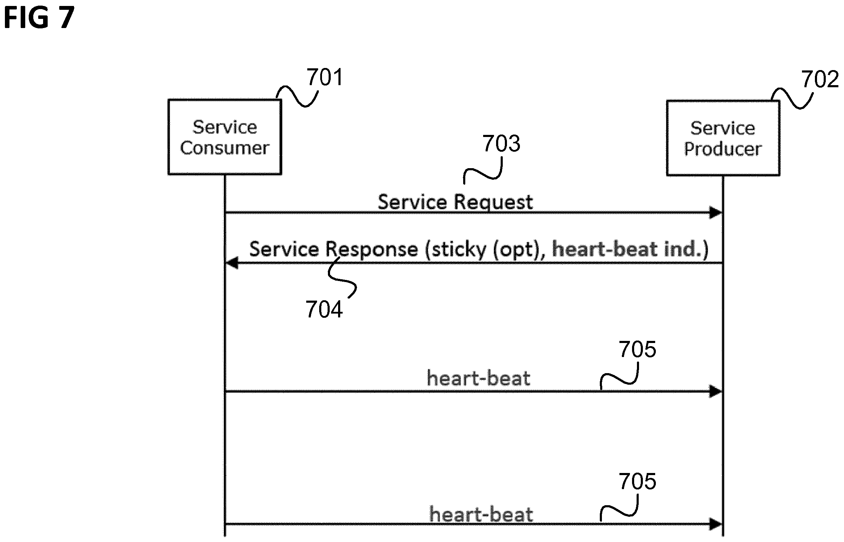

The 5GC entities of a group can be service consumers or service producers. When a service consumer performs a transaction with a service producer, the request for having heart-beat message from the peer entity can be sent in a Service Response message by the Service Producer (as shown in figures 6 and 7) or it can be in a Service Request message by the Service Consumer (as shown in figure 2).

Two options for the direction of the heart-beat messages are illustrated in figures 6 and 7.

Figure 6 shows an option where a service consumer 601 sends a service request 603 to a service producer 602 and the service producer 602 responds with a service response 604 and sends heart-beat messages 605 to the service consumer 601.

The service response 604 may indicate stickiness, indicates that heart-beat messages will be transmitted and may optionally include a timer indicating the periodicity of the heart-beat messages 605.

Figure 7 shows an option where a service consumer 701 sends a service request 703 to a service producer 702 and the service producer 702 responds with a service response 704 and the service consumer 701 sends heart-beat messages 705 to the service producer 702.

The service response 704 may indicate stickiness, indicates that heart-beat messages should be transmitted and may optionally include a timer indicating the periodicity of the heart-beat messages 705.

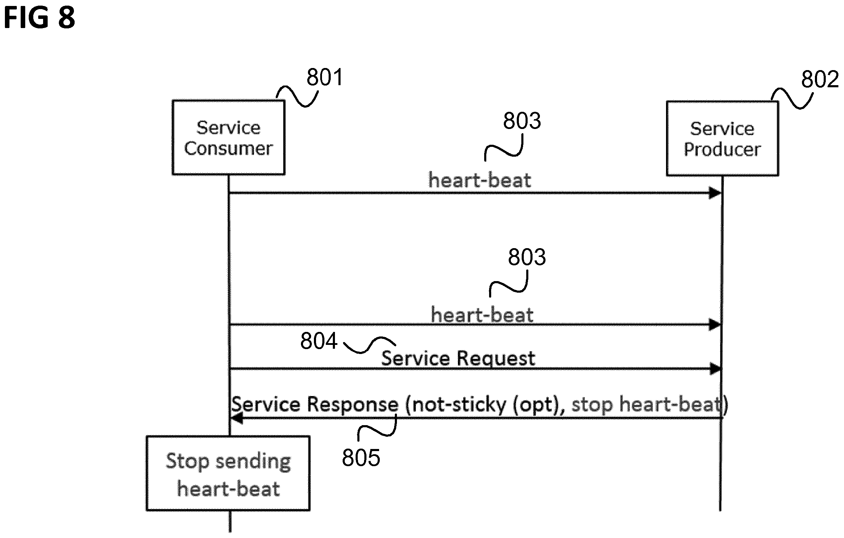

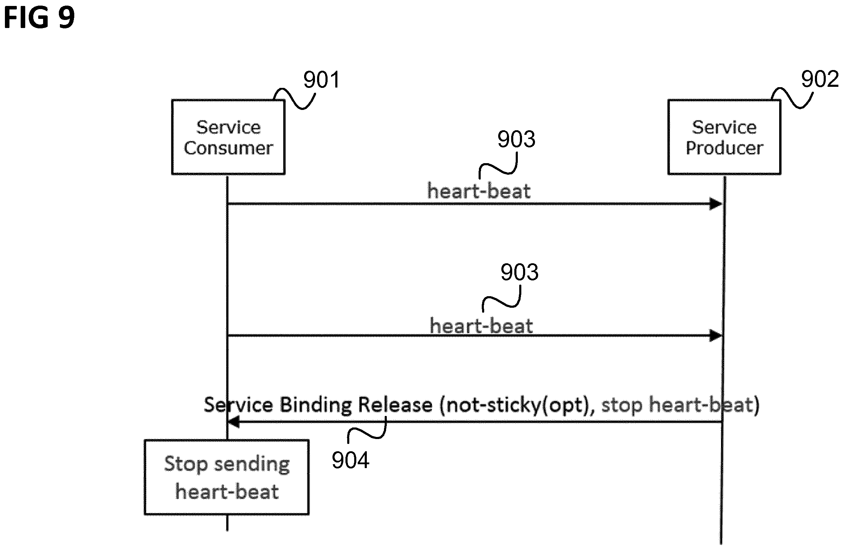

Two options to request to stop sending heart-beat messages are illustrated in figures 8 and 9.

Figure 8 shows an option where a service consumer 801 sends heart-beat messages 803 to a service producer 802 and sends a service request 804 to which the service producer 802 responds with a service response 805 which indicates that the service consumer 801 should stop sending heart-beat messages.

The service consumer 801 then stops sending heart-beat messages.

The indication to stop transmitting heart-beat messages may be included in a Service Request message or in a Service Response message. Optionally the stop heart-beat indication may be contextual with a non-stickiness indication (e.g. included in a message of the 5GC entity which indicated it wished to be sticky, wherein the message indicates that the 5GC entity wishes to stop to be sticky).

Figure 9 shows an option where a service consumer 901 sends heart-beat messages 903 to a service producer 902 and the service producer 902 sends a Service Binding Release message 904 which indicates that the service consumer 901 should stop sending heart-beat messages.

The service consumer 901 then stops sending heart-beat messages.

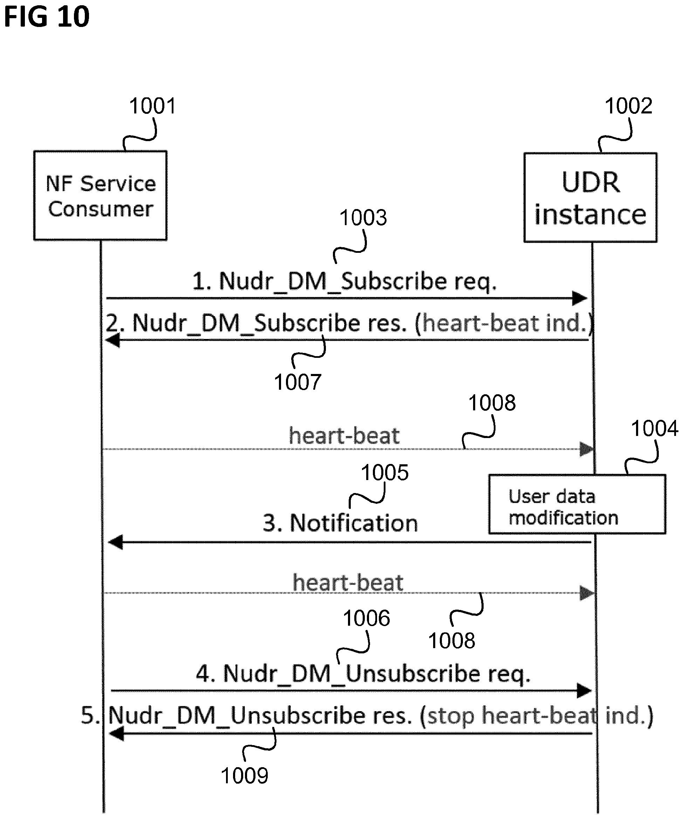

Figure 10 shows a message flow diagram 1000 illustrating a use case for heart-beat transmissions.

The message flow takes place between an NF Service Consumer 1001 and an UDR (User Data Repository) 1002 (which may for example be part of the core network 110).

According to 3GPP, using a Nudr_DM_Subscribe service operation 1003 the NF service consumer 1001 (e.g. UDM, PCF or NEF (Network Exposure Function)) may perform the subscription to notification on data modification in the UDR 1002. As a consequence, e.g. in 1005, the UDR notifies the NF service consumer about modification of data 1004.

When the NF service consumer 1001 wants to unsubscribe from the notifications, it sends a Nudr_DM_Unsubscribe 1006 to the UDR 1002.

The UDR 1002 may indicate in a response to the subscription 1007 to the NF service consumer 1001 to start sending heart-beat messages 1008 to check whether the NF service consumer 1001 is still alive. In response 1009 to the Nudr_DM_Unsubscribe 1006 the UDR instance 1002 may indicate that the NF Service Consumer 1001 should stop sending heart-beat messages.

Additionally, the UDR 1002 may wish to create a sticky binding so that the NF service consumer 1001 sends the Nudr_DM_Unsubscribe 1006 to the same UDR instance 1002 that received the Nudr_DM_Subscribe 1003. In this case the UDR 1002 shall indicate to the NF service consumer 1001 that the binding to the UDR instance 1002 is sticky.

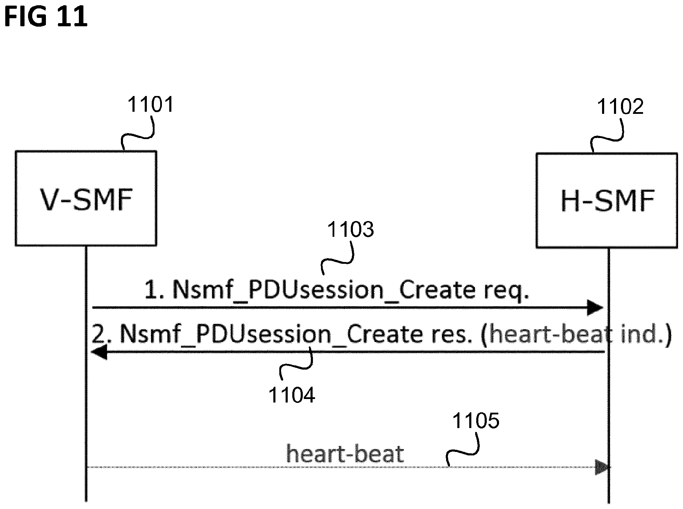

Figure 11 shows a message flow diagram 1100 illustrating another use case for heart-beat transmissions.

The message flow takes place between an H-SMF (Home SMF) 1101 and V-SMF (Visited SMF) 1102.

In this example, the V-SMF 1102 (SMF in the visited PLMN (Public Land Mobile Network)) wants to receive heart-beat from the H-SMF (SMF in the home PLMN) that has been used to establish PDU sessions by the V-SMF 1101, to check if H-SMF 1102 is still alive and the connectivity to the H-SMF is available. Accordingly, in response to a PDU Session create request 1103, the H-SMF 1102 indicates in a response message 1104 that the V-SMF 1101 should sent heart-beat messages 1105.

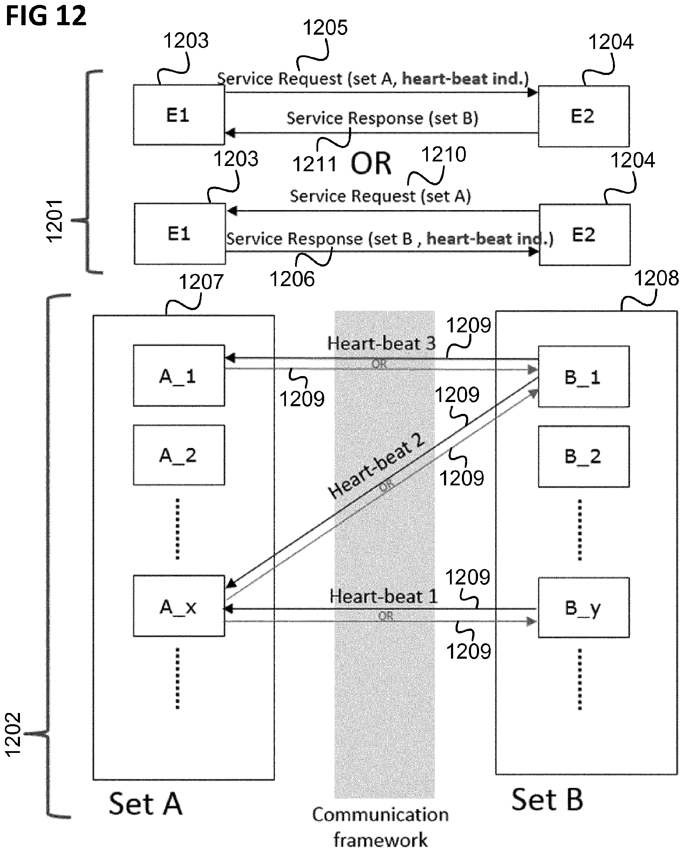

Figure 12 illustrates a method according to various embodiments to handle heart-beat messages between service entities in a communication network in which control plane and user plane are implemented by a multiplicity of service entities.

In 1201, a first service entity 1203 (denoted as E1) sends a service request 1205 or a service response 1206 to a second service entity (denoted as E2) including an indication that one service entity of a first set of service entities 1207 (denoted as set A and corresponding to E1) must receive or will send heart-beat messages 1209.

In 1202,
- one of the service entities of a second set of service entities 1208 (denoted as set B and corresponding to E2) sends heart-beat messages periodically to one service entity of the set A or, depending on the indication
- one of the service entities of the set A sends heart-beat messages periodically to one service entity of set B of service entities.

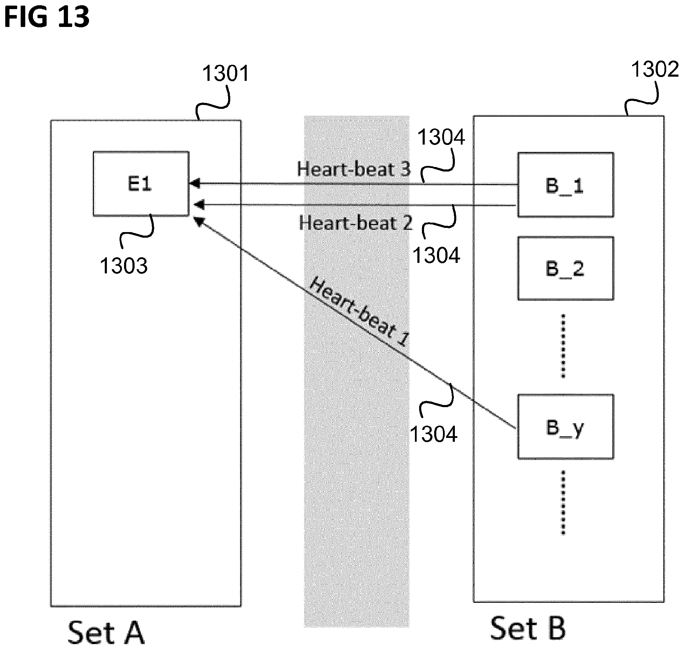

The service request 1205 or service response 1206 may further indicate that set A only includes one service entity. This is illustrated in figure 13.

Figure 13 illustrates the case that a first group of service entities 1301 includes only one service entity 1303 and that one or more of the service entities of a second group of service entities 1302 send heart-beat messages 1304 to that service entity 1303.

The service request 1205 or service response 1206 may indicate that the set A includes only one service entity by indicating that subsequent transactions by the entities of the set B to request a service provided by E1 should be performed with said service entity of the set A. E1 may for example correspond to that single service entity of set A.

The service request 1205 or service response 1206 may include a list of service entities belonging to set A.

E2 may send a service request 1210 (corresponding to service response 1206) or a service response 1211 (corresponding to service request 1205). The service request 1210 or service response 1211 sent by E2 may include a list of service entities belonging to set B.

A service entity of set B that sends a heart-beat message to one service entity of the set A may determine the set A by querying a network repository and selecting one of the entities of the set A received by the network repository.

A service entity of set B that sends a heart-beat message to one service entity of set A may send the heart-beat message to a communication framework configured to determine the set A, select the service entity A_x of the set A to which the message must be sent and forward the message to this service entity A_x.

One service entity of set A may send a message (e.g. further service request or a further service response) to one of the service entities of set B including an indication to stop sending heart-beat messages.

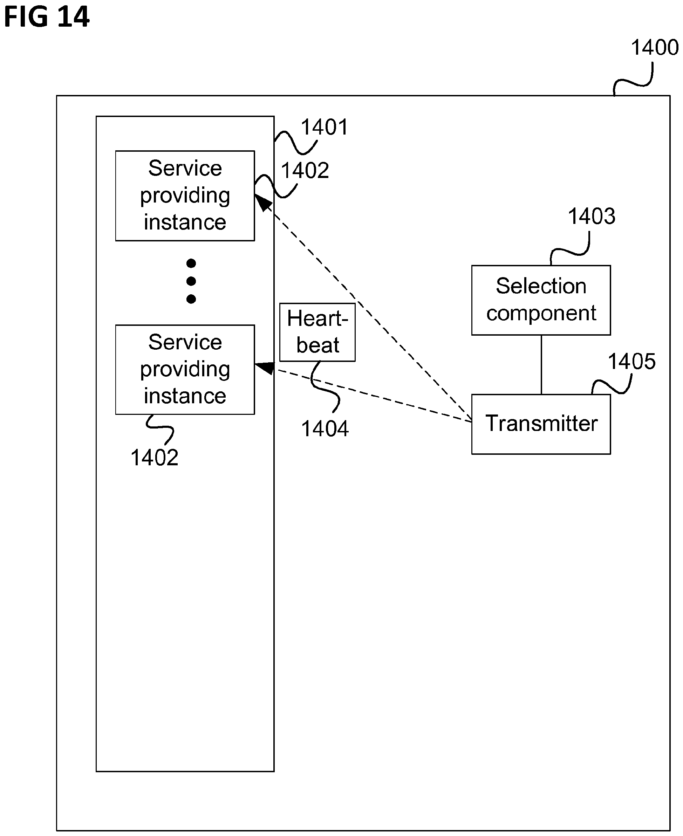

In summary, according to various embodiments, a communication system core network is provided as illustrated in figure 14.

Figure 14 shows a communication system core network 1400 according to an embodiment.

The communication system core network 1400 includes a first network service 1401 being provided by a plurality of service providing instances 1402.

The communication system core network 1400 further includes a component 1403 configured to select one of the service providing instances 1402 as recipient for a heart-beat message 1404 of a second network service and a transmitter 1405 configured to transmit the heart-beat message 1404 to the selected service providing instance.

In other words, according to various embodiments, a core network entity which, among a plurality of entities, provides a certain service, e.g. a service of a network function, e.g. a service of the core network for providing a communication session, is selected and used as a target for a heart-beat message. The heart-beat message is a heart-beat message of a second network service, i.e. a message which indicates that the second network service is still available, i.e. "alive", i.e. has not failed or has not become unavailable.

For example, an association between the first network service and the second network service is not sticky such that the instance providing the first network service may vary, e.g. from transaction to transaction between the first network service and the second network service (wherein a transaction may include a message exchange of one or more messages between the first network service and the second network service). In such a case, one of the service providing instances may be selected as a target for the heart-beat message, e.g. the service providing instance which was involved in the last transaction carried out between the first network service and the second network service or a current service providing instance which is involved in a transaction currently carried out between the first network service and the second network service and/or which currently provides the first network service. If there is stickiness, i.e. there is a fixed association (i.e. a fixed binding) between the service providing instance and the second network service (e.g. with a service providing instance providing the second network service), that fixedly bound service providing instance may be selected as target for the heart-beat message.

The approach of figure 14 allows a keep-alive of the communication between two unbound or temporarily bound 5GC entities. It thus for example allows detecting connectivity failures in a scenario with unbound or temporarily bound 5GC entities.

The communication system core network is for example a Fifth Generation core network, i.e. a 5GC. The service providing instances may be various network function instances such as instances of an SMF, an AMF, a UDR etc. The service may be a corresponding functionality of the network function, i.e. a service provided by the network function, for example in context of providing a communication session, such as creation of an SM context.

Each one of the first network service and the second network service may act as a service provider (for the other network service) or a service consumer (using the other network service).

The transmitter 1405 may be any entity which transmits the heart-beat message. The transmitter may be part of an entity providing the second network service or may be part of a communication framework or service mesh transmitting (e.g. forwarding) the heart-beat message to the selected service providing instance.

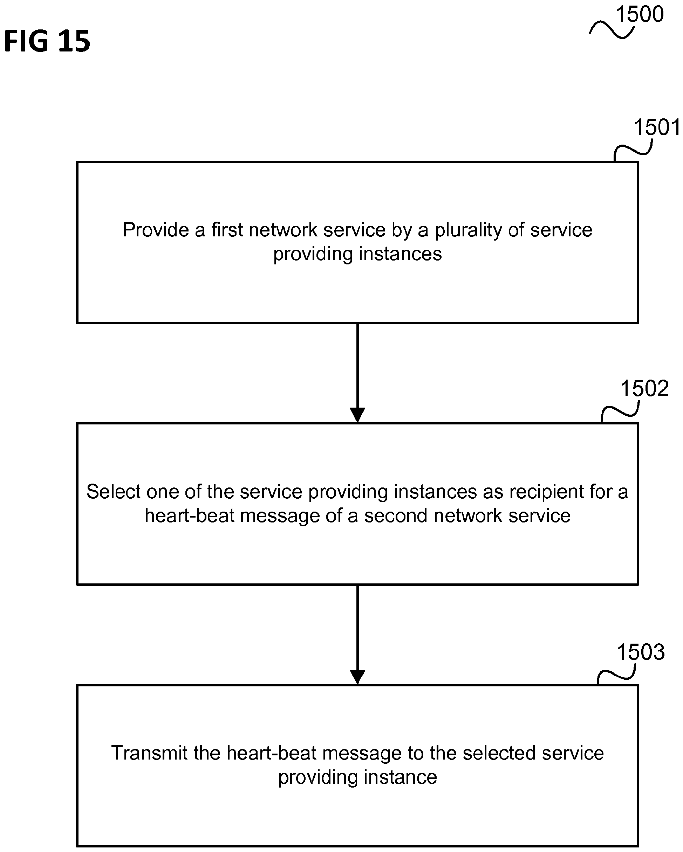

According to one embodiment, a method is carried out in a communication system core network as illustrated in figure 15.

Figure 15 shows a flow diagram 1500 illustrating a method for providing heart-beat messages.

In 1501, a first network service is being provided by a plurality of service providing instances.

In 1502, one of the service providing instances is selected as recipient for a heart-beat message of a second network service.

In 1503, the heart-beat message is transmitted to the selected service providing instance.

The various involved communication system components (in particular the service providing instances and the component doing the selection) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions which will be described in more detail below may also be understood as a "circuit".

While specific aspects have been described, it should be understood by those skilled in the art that various changes in form and detail may be made therein without departing from the scope of protection as defined by the appended claims.

## Claims

1. A communication system core network comprising:
a plurality of service providing instances (1402) configured to provide a first network service (1401) ;
a component (1403) configured to select one of the service providing instances as recipient for a heart-beat message (1404) of a second network service,
wherein the component is a component providing the second network service; and
a transmitter (1405) configured to transmit the heart-beat message to the selected service providing instance, wherein the transmitter is comprised in an entity providing the second network service;
a further service providing instance configured to provide the second network service;
wherein any service providing instance of the plurality of service providing instances is configured to provide the first network service for the second network service or use the second network service for providing the first network service and is unbound to the further service providing instance;
wherein one of the service providing instances is configured to request the further service providing instance to transmit heart-beat messages and the further service providing instance is configured to generate heart-beat messages including the heart-beat message as a consequence of the request.

2. The communication system core network of claim 1, wherein the component is a component providing a communication framework or a service mesh of the communication system core network.

3. The communication system core network of claim 1, wherein the one of the service providing instances is configured to include the request in a message to request the second network service or in a message to respond to a request by the second network service for the first network service.

4. The communication system core network of claim 3, wherein the one of the service providing instances is configured to include in the message a list of the plurality of service providing instances that can be selected to receive the heart-beat message.

5. The communication system core network of claim 4, wherein the list includes only the one service instance that sends the message

6. The communication system core network of any one of claims 1 to 5, wherein the further service providing instance is configured to send a message to one of the service providing instances indicating that it is going to send heart-beat messages.

7. The communication system core network of any one of claims 1 to 6, wherein the first network service is provided by a first network function.

8. The communication system core network of any one of claims 1 to 7, wherein the second network service is provided by a second network function.

9. The communication system core network of any one of claims 1 to 8, wherein the service providing instances are core network entities.

10. The communication system core network of any one of claims 1 to 9, wherein the heart-beat message of the second network service is one of a periodic sequence of heart-beat messages of the second network service.

11. Method for providing heart-beat messages comprising:
providing a first network service by a plurality of service providing instances (1501);
selecting one of the service providing instances as recipient for a heart-beat message of a second network service (1502);
transmitting, from a service providing the second service, the heart-beat message to the selected service providing instance (1503);
wherein any service providing instance of a plurality of service providing instances is configured to provide the first network service for the second network service or use the second network service for providing the first network service and is unbound to the further service providing instance;
wherein one of the service providing instances is configured to request the further service providing instance to transmit heart-beat messages and the further service providing instance is configured to generate heart-beat messages including the heart-beat message as a consequence of the request.

## Patentansprüche

1. Ein Kommunikationssystem-Kernnetz, aufweisend:
eine Mehrzahl von Dienst bereitstellenden Instanzen (1402), die so konfiguriert sind, dass sie einen ersten Netzwerkdienst (1401) bereitstellen;
eine Komponente (1403), die so konfiguriert ist, dass sie eine der dienstbereitstellenden Instanzen als Empfänger für eine Herzschlag-Nachricht (1404) eines zweiten Netzwerkdienstes auswählt,
wobei die Komponente eine Komponente ist, die den zweiten Netzwerkdienst bereitstellt; und
einen Sender (1405), der so konfiguriert ist, dass er die Herzschlag-Nachricht an die ausgewählte Dienst bereitstellende Instanz sendet, wobei der Sender in einer Einheit enthalten ist, die den zweiten Netzwerkdienst bereitstellt;
eine weitere Dienst bereitstellende Instanz, die so konfiguriert ist, dass sie den zweiten Netzwerkdienst bereitstellt;
wobei jede Dienst bereitstellende Instanz der Mehrzahl von Dienst bereitstellenden Instanzen so konfiguriert ist, dass sie den ersten Netzwerkdienst für den zweiten Netzwerkdienst bereitstellt oder den zweiten Netzwerkdienst zur Bereitstellung des ersten Netzwerkdienstes verwendet und an die weitere Dienst bereitstellende Instanz ungebunden ist;
wobei eine der Dienst bereitstellenden Instanzen so konfiguriert ist, dass sie die weitere Dienst bereitstellende Instanz auffordert, Heartbeat-Nachrichten zu übertragen, und die weitere Dienst bereitstellende Instanz so konfiguriert ist, dass sie als Folge der Anforderung Heartbeat-Nachrichten einschließlich der Heartbeat-Nachricht erzeugt.

2. Das Kommunikationssystem-Kernnetz nach Anspruch 1, wobei die Komponente eine Komponente ist, die ein Kommunikations-Rahmenwerk oder ein Service-Mesh des Kommunikationssystem-Kernnetzes bereitstellt.

3. Das Kommunikationssystem-Kernnetz nach Anspruch 1, wobei die eine der dienstbereitstellenden Instanzen so konfiguriert ist, dass sie die Anforderung in einer Nachricht zur Anforderung des zweiten Netzwerkdienstes oder in einer Nachricht zur Beantwortung einer Anforderung des zweiten Netzwerkdienstes für den ersten Netzwerkdienst einfügt.

4. Das Kommunikationssystem-Kernnetz nach Anspruch 3, wobei die eine der dienstbereitstellenden Instanzen so konfiguriert ist, dass sie in die Nachricht eine Liste der Mehrzahl von dienstbereitstellenden Instanzen einfügt, die ausgewählt werden können, um die Heartbeat-Nachricht zu empfangen.

5. Das Kommunikationssystem-Kernnetz nach Anspruch 4, wobei die Liste nur die eine Dienst bereitstellende Instanz enthält, die die Nachricht sendet.

6. Das Kommunikationssystem-Kernnetz eines der Ansprüche 1 bis 5, wobei die weitere Dienst bereitstellende Instanz so konfiguriert ist, dass sie eine Nachricht an eine der Dienst bereitstellenden Instanzen sendet, die anzeigt, dass sie Herzschlagnachrichten senden wird.

7. Das Kommunikationssystem-Kernnetz nach einem der Ansprüche 1 bis 6, wobei der erste Netzwerkdienst durch eine erste Netzwerk-Funktion bereitgestellt wird.

8. Das Kommunikationssystem-Kernnetz nach einem der Ansprüche 1 bis 7, wobei der zweite Netzwerkdienst durch eine zweite Netzwerk-Funktion bereitgestellt wird.

9. Das Kommunikationssystem-Kernnetz nach einem der Ansprüche 1 bis 8, wobei die Dienst bereitstellenden Instanzen Kernnetzeinheiten sind.

10. Das Kommunikationssystem-Kernnetz nach einem der Ansprüche 1 bis 9, wobei die Herzschlagnachricht des zweiten Netzwerkdienstes eine einer periodischen Sequenz von Herzschlagnachrichten des zweiten Netzwerkdienstes ist.

11. Verfahren zur Bereitstellung von Herzschlag-Nachrichten, aufweisend:
Bereitstellen eines ersten Netzwerkdienstes durch eine Mehrzahl von Dienst bereitstellenden Instanzen (1501);
Auswählen einer der dienstbereitstellenden Instanzen als Empfänger für eine Herzschlag-Nachricht eines zweiten Netzwerkdienstes (1502);
Übertragen der Herzschlag-Nachricht von einem Dienst, der den zweiten Dienst bereitstellt, an die ausgewählte Dienst bereitstellende Instanz (1503);
wobei jede Dienst bereitstellende Instanz aus einer Mehrzahl von Dienst bereitstellenden Instanzen so konfiguriert ist, dass sie den ersten Netzwerkdienst für den zweiten Netzwerkdienst bereitstellt oder den zweiten Netzwerkdienst zur Bereitstellung des ersten Netzwerkdienstes verwendet und an die weitere Dienst bereitstellende Instanz ungebunden ist;
wobei eine der Dienst bereitstellenden Instanzen so konfiguriert ist, dass sie die weitere Dienst bereitstellende Instanz auffordert, Heartbeat-Nachrichten zu übertragen, und die weitere Dienst bereitstellende Instanz so konfiguriert ist, dass sie als Folge der Anforderung Heartbeat-Nachrichten einschließlich der Heartbeat-Nachricht erzeugt.

## Revendications

1. Réseau d'infrastructure d'un système de communication comprenant :
une pluralité d'instances fournisseuses de services (1402) configurées pour fournir un premier service réseau (1401) ;
un composant (1403) configuré pour sélectionner l'une des instances fournisseuses de services en tant que destinataire d'un message de battement de cœur (1404) d'un second service réseau,
où le composant est un composant qui fournit le second service réseau ; et
un émetteur (1405) configuré pour transmettre le message de battement de cœur à l'instance fournisseuse de services sélectionnée, où l'émetteur est compris dans une entité qui fournit le second service réseau ;
une instance fournisseuse de services configurée pour fournir le second service réseau ;
où n'importe quelle instance fournisseuse de services de la pluralité d'instances fournisseuses de services, est configurée pour fournir le premier service réseau pour le second service réseau, ou pour utiliser le second service réseau pour fournir le premier service réseau, et n'est pas liée à l'autre instance fournisseuse de services ;
où l'une des instances fournisseuses de services est configurée pour demander à l'autre instance fournisseuse de services de transmettre des messages de battement de cœur, et l'autre instance fournisseuse de services est configurée pour générer des messages de battement de cœur comprenant le message de battement de cœur en tant que résultat de la demande.

2. Réseau d'infrastructure d'un système de communication selon la revendication 1, où le composant est un composant qui fournit un cadre de communication ou une maille de service du réseau d'infrastructure d'un système de communication.

3. Réseau d'infrastructure d'un système de communication selon la revendication 1, où l'une des instances fournisseuses de services est configurée pour inclure la demande dans un message pour demander le second service réseau, ou dans un message pour répondre à une demande par le second service réseau pour le premier service réseau.

4. Réseau d'infrastructure d'un système de communication selon la revendication 3, où l'une des instances fournisseuses de services est configurée pour inclure dans le message une liste de la pluralité d'instances fournisseuses de service qui peuvent être sélectionnées pour recevoir le message de battement de cœur.

5. Réseau d'infrastructure d'un système de communication selon la revendication 4, où la liste comprend seulement l'instance de services qui envoie le message

6. Réseau d'infrastructure d'un système de communication selon l'une quelconque des revendications 1 à 5, où l'autre instance fournisseuse de services est configurée pour envoyer un message à l'une des instances de services qui indique qu'elle va envoyer des messages de battement de cœur.

7. Réseau d'infrastructure d'un système de communication selon l'une quelconque des revendications 1 à 6, où le premier service réseau est fourni par une première fonction réseau.

8. Réseau d'infrastructure d'un système de communication selon l'une quelconque des revendications 1 à 7, où le second service réseau est fourni par une seconde fonction réseau.

9. Réseau d'infrastructure d'un système de communication selon l'une quelconque des revendications 1 à 8, où les instances fournisseuse de services sont des entités de réseau d'infrastructure.

10. Réseau d'infrastructure d'un système de communication selon l'une quelconque des revendications 1 à 9, où le message de battement de cœur du second service réseau est l'une d'une séquence périodique de messages de battement de cœur du second service réseau.

11. Procédé destiné à fournir des messages de battement de cœur, comprenant les étapes suivantes :
fournir un premier service réseau par une pluralité d'instances fournisseuses de services (1501) ;
sélectionner l'une des instances fournisseuses de services en tant que destinataire d'un message de battement de cœur d'un second service réseau, (1502)
transmettre, à partir d'un service qui fournit le second service, le message de battement de cœur à l'instance fournisseuse de services sélectionnée (1503) ;
où n'importe quelle instance fournisseuse de services d'une pluralité d'instances fournisseuses de services, est configurée pour fournir le premier service réseau pour le second service réseau, ou pour utiliser le second service réseau pour fournir le premier service réseau, et n'est pas liée à l'autre instance fournisseuse de services ;
où l'une des instances fournisseuses de services est configurée pour demander à l'autre instance fournisseuse de services de transmettre des messages de battement de cœur, et l'autre instance fournisseuse de services est configurée pour générer des messages de battement de cœur comprenant le message de battement de coeur en tant que résultat de la demande.
